# EUROPEAN PATENT APPLICATION

(11) **EP 4 414 897 A1**
(43) Date of publication of application: **14.08.2024**
(21) Application number: 24156612.4
(22) Date of filing: 08.02.2024
(51) Int. Cl.: G06N 5/025

(54) **DETECTING A DATA CASCADE**

(30) Priority: 09.02.2023 US 202318166999
(71) Applicant: Zendesk, Inc., San Francisco, California 94103 (US)
(72) Inventor: BISWAS, Sanjeev Kumar, Ashfield, 2131 NSW (AU); KURZYDLO, Jan Krzysztof, 30-302 Krakow (PL)
(74) Representative: D Young & Co LLP

(57) **Abstract**

Systems and methods are provided for detecting an actual or potential cascade of data rules within a system that processes data, or a cascade of data operations caused by the rules. A cascade involves multiple rules such that an action or actions performed by one rule upon a set of data (e.g., when specified conditions are satisfied) trigger automatic execution of another rule that performs one or more additional actions. Depending on the length and complexity of a cascade, which may be created accidentally, significant amounts of computing resources may be wasted, particularly if the cascade creates a loop that, if unresolved, would cause the cascade to execute repeatedly. One or more temporary data structures are employed to track the effects of a collection of rules (e.g., changes to data item values) to determine whether and when one rule's action(s) trigger another rule.

## Description

### BACKGROUND

This disclosure relates to the field of computer systems. More particularly, a system and methods are provided for detecting a sequence or set of rules or data operations that will or could cause a cascade of data changes to one or more data items.

Organizations that maintain large quantities of data often implement automated data operations for updating the data in response to electronic events. For example, new data records may be created in response to interactions with users, and values within records may be updated automatically thereafter based on further action by the users and/or the organization.

More specifically, data operations may be initiated by explicit rules that specify one or more conditions under which a particular operation is to be implemented. Different rules are created at different times for different purposes, and may possibly be generated by different developers or administrators. When an organization implements hundreds or thousands of rules, it is difficult to track all of them, and multiple rules may be created that commonly target (e.g., change) one or more particular data values or fields of a record. For example, a first rule may change a field to a first value when a first condition is detected (e.g., when some other field or fields have particular values), a second rule may change the field to a second value when a second condition is detected, and so on. Thus, each of the cascading rules changes the field or fields in a way that triggers another of the rules to make another change. It is even possible that a later rule changes the fields back to values that triggered the first rule, thereby creating a loop.

Due to the number of rules that may be implemented and the fact that different developers may generate rules that manipulate the same data items, and inadvertently create a long cascade, cascading data rules may waste significant levels of computing resources (e.g., memory, processor cycles, storage space) and, in addition, may be difficult to detect due to the complexity of an organization's rules and data.

### SUMMARY

Particular aspects are set out in the appended independent claims. Various optional embodiments are set out in the dependent claims.

In some embodiments, systems and methods are provided for detecting and/or eliminating cascading data rules that are triggered automatically by changes to one or more data items in a set of data. In these embodiments, a set or sequence of data rules or business rules is examined with regard to one or more particular source data items (e.g., fields of a data record) that may trigger one or more of the rules when set to particular values. The examination may involve determining and comparing the values for the source data item that trigger different rules in order to identify a sequence of cascading rules that, when applied, modify the data item to values that trigger other data operations.

A limited sequence of cascading data rules or operations (e.g., two or three) may be permitted without incurring a problem or a possible problem, and cascades that are unlikely to be encountered in a production environment (e.g., because they require data item values that are impossible or unlikely) may also be overlooked. Otherwise, a cascading set of data rules may be brought to the attention of a developer or an operator that is creating or changing a rule, or some other action may be taken. In particular, some action (e.g., deactivation of a rule or data operation, roll-back of a rule change) may be taken to stop or prevent a loop in which a sequence of data operations causes the source data item to change through a series of values that, if unchecked, could or would cause repeated or unending execution of those data operations and/or others.

Detection of or a search for cascading data operations may be performed whenever a new data or business rule is created, when a rule is modified, and/or at other times.

In some embodiments, detection of a cascade involves identifying and examining a set of rules that perform associated data operations (e.g., to set or change a value of a data item) when conditions of the rules are satisfied. Combinations of the rules are tested in any or all possible sequences to determine whether a data operation executed by one rule triggers execution of another rule's data operation(s).

Each condition of a rule compares a specified data item (e.g., a field or property of a data record) with a target value using a specified operator (e.g., greater than, equal to). A given rule may comprise multiple paths (e.g., by joining conditions with OR operators), and as long as the sequence of conditions that define one path of a rule is satisfied, the rule's associated data operation(s) is or are executed.

### DESCRIPTION OF THE FIGURES

FIG. 1 is a block diagram depicting a computing environment in which cascading data operations may occur and/or be detected, in accordance with some embodiments.
FIG. 2A shows two sample rules, in accordance with some embodiments.
FIG. 2B demonstrates deconstruction of a multi-path rule into separate paths, in accordance with some embodiments.
FIGs. 3A-D illustrate the evolution of a temporary data structure for detecting and/or tracking a cascade of data rules, in accordance with some embodiments.
FIG. 4 is a flow chart illustrating a method of detecting cascading data operations, in accordance with some embodiments.
FIGs. 5A-B comprise a flow chart illustrating a method of traversing a data rule while detecting cascading rules, in accordance with some embodiments.
FIG. 6 is a flow chart illustrating a method of examining some or all possible sequences of a set of rules to determine if any sequence forms a cascade, in accordance with some embodiments.

### DETAILED DESCRIPTION

The following description is presented to enable any person skilled in the art to make and use the disclosed embodiments, and is provided in the context of one or more particular applications and their requirements. Various modifications to the disclosed embodiments will be readily apparent to those skilled in the art, and the general principles defined herein may be applied to other embodiments and applications without departing from the scope of those that are disclosed. Thus, the scope is not to be limited to the embodiments shown, but is to be determined by the claims in accordance with Article 69 EPC.

In some embodiments, a system and methods are provided for detecting a cascading sequence or set of data rules (i.e., rules for executing operations upon a collection of data). In these embodiments, a rule in a cascade is triggered by an update to the value of a particular data item (e.g., a field of a data record) and initiates a data operation that triggers another rule in the cascade, perhaps by further updating that data item or by modifying a different data item.

For example, when a given data item is changed to a first value, a first rule that applies when the data item has the first value (and possibly when one or more other conditions are also satisfied) may execute automatically and initiate one or more actions that include changing the data item to a second value. A second rule may execute when the data item has the second value, and initiate one or more additional actions that include changing the data item to a third value, and so on. It is possible that one of the rules associated in the cascading data operations may change the data item back to the first value and thereby create a loop.

It should be realized that cascading data rules and operations may waste significant amounts of computing resources (e.g., processor cycles, memory, communication bandwidth, data storage), particularly when the rules cause an operational loop. When cascading data rules execute in an organization's production environment, performance of their computing systems may degrade accordingly. In addition, depending on the complexity of the cascade (e.g., the number of data rules included in the cascade, the number of data items affected by the rules), it can be very difficult to detect or unravel the cascade. For example, identifying a cascade of rules may be an NP (nondeterministic polynomial) -hard problem.

In embodiments disclosed herein, data rules comprise conditions and actions, and may include triggers, automations, and/or other automated instructions for maintaining and updating a set of data. Each condition tests one or more data items for particular values or value ranges, using operators such as == (equal to), != (not equal to), > (greater than), >= (greater than or equal to), < (less than), <= (less than or equal to), ∩ (intersection), ∪ (union) and/or others. Depending on the type of data, the operators may be algebraic operators, set operators, string operators, etc.

A data rule may combine multiple conditions using logical operators (e.g., AND, OR). Although a given data rule may be relatively complex and include virtually any number of conditions and logical operators, they can generally be deconstructed into one or more paths. When all conditions of at least one path through a rule are true or satisfied by a target dataset, the action or actions associated with the rule are performed upon that dataset (and/or other processing is performed).

In some embodiments, a cascade of data rules is detected by examining a set of rules (e.g., some or all rules, some or all rules that rely upon or affect a given data item) in each of multiple (or all) possible sequences. Thus, the rules may be examined in a first sequence or order, then a second sequence, a third sequence, and so on.

Within each sequence, from the first rule in the sequence forward, the data items and values of those items that will trigger execution of the rule are noted, as well as any changes that the rule will make to those data items (and/or others) if the rule executes. The same type of examination is made for the second rule to determine if the changes made by the first rule (if it executes) would trigger execution of the second rule and what changes the second rule would make. When multiple successive rules in any sequence are identified that cause them to execute in sequence automatically, a cascade of rules has been identified.

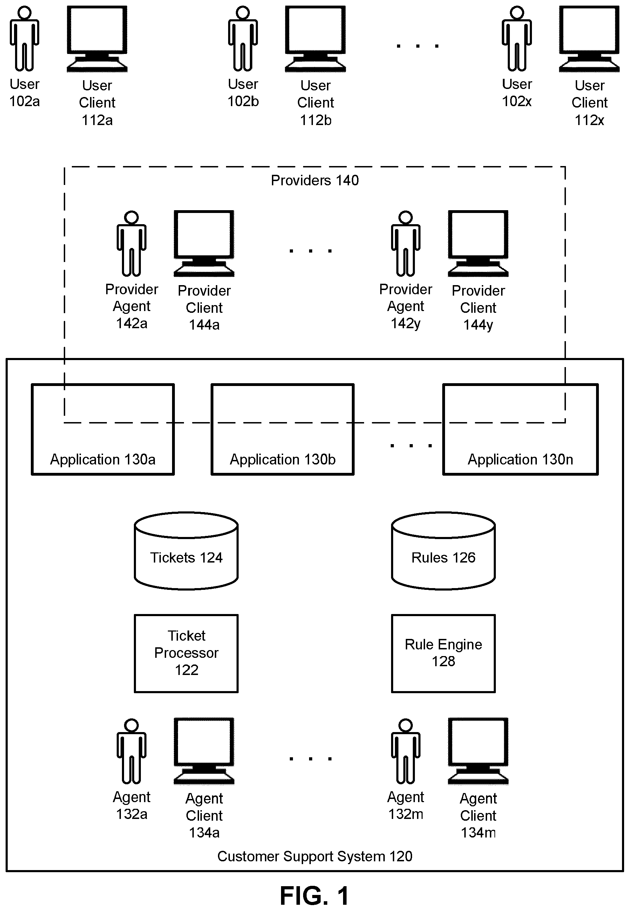

FIG. 1 is a diagram of an illustrative computing environment in which cascading data rules may be detected and resolved, according to some embodiments.

In the environment of FIG. 1, an organization provides applications and operates customer support system 120 to support use of the applications. In particular, customer support system 120 hosts applications 130 (e.g., applications 130a - 130n) and provides assistance for those applications via agents 132a - 132m, which operate agent clients 134a - 134m. In some implementations, however, customer support system 120 and applications 130 may be provided by different entities. Thus, although applications 130 are depicted as residing within customer support system 120 in FIG. 1, in some embodiments the applications may be distinct from the customer support system.

Each application 130 is used (e.g., subscribed to) by any number of providers 140 (e.g., businesses, governmental entities, and/or other organizations) to interact with end users 102a - 102x, which access the applications via user clients 112a - 112x. Providers 140 may offer limited assistance to users 102 via provider agents 142a - 142y and provider clients 144a - 144y.

End user clients 112 are coupled to providers 140, which in turn are coupled to customer support system 120. End user clients 112 access the physical and/or virtual computers that host applications 130 via any number and type of communication links. For example, some user clients 112 may execute installed software for accessing any or all applications; this software may be supplied by providers 140 and/or customer support system 120. Other user clients 112 may execute browser software that communicates with web servers that are associated with (e.g., that host) applications 130. The web servers may be operated by customer support system 120, the organization that hosts customer support system 120, and/or individual providers 140.

In some implementations, a user client 112 may access customer support system 120 and applications 130 directly (e.g., via one or more networks such as the Internet); in other implementations, a user client 112 may first connect to a provider 140 (e.g., a website associated with a particular provider) and be redirected to customer support system 120. In yet other implementations, one or more applications 130 may execute upon computer systems operated by a provider 140, in which case application data are reported to or retrieved by customer support system 120.

In some embodiments, end users 102 use applications 130 in the context of particular providers. In other words, each user session with an application is associated with at least one provider 140. The context may be set when an end user is redirected to customer support system 120 from the corresponding provider's site, when the end user logs in using credentials provided by the provider, or in some other way.

When an end user 102 has a problem or question about a product or service offered by a provider 140, to obtain assistance the end user can access customer support system 120, possibly via a provider 140. For example, a user 102 of a provider 140 that sells retail goods may need help canceling an order that was erroneously entered. This help may be provided by a live provider agent 142, a live customer service agent 132, and/or by an automated agent (e.g., a bot). In addition to or instead of assisting end users and/or providers with applications 130, a provider agent 142 or a customer support agent 132 may offer information and/or services, such as product support, operating instructions, a package-delivery service, etc.

Providers 140 may contact the organization that hosts customer support system 120 with questions or problems. For example, a provider 140 may have questions regarding how to configure the provider's instance of an application 130 or a session with an application 130. As another example, a provider 140 may have suffered data loss or some other performance problem associated with the provider's instance or session with an application. In such a case, the provider may seek help from the organization that hosts customer support system 120 via an agent 132 and/or an automated bot of the customer support system.

Customer support system 120 manages user/provider issues and contacts using ticket processor 122 and tickets 124, and other resources as necessary. In the illustrated embodiments, a ticket represents an electronic conversation between entities depicted in Fig. 1, such as a provider 140 and customer support system 120, an end user 102 and a provider 140, or an end user 102 and customer support system 120. Ticket processor 122 comprises a set of software and/or hardware resources that generate or register a new ticket 124 when needed, and that update the ticket over time as various actions are performed and/or further communications are exchanged, as dictated by applicable data rules. End users 102 and providers 140 may submit tickets through a variety of channels, including electronic mail, web form, chat, call, text, and social media post. Each ticket 124 includes various data and metadata associated with the issue and actions taken to resolve it. Ticket database or repository 124 may take any form and may be centralized or distributed.

An example ticket includes a ticket identifier and pertinent information (or links to pertinent information) regarding the issue or issues associated with creation of the ticket. The information may include multiple fields and corresponding values that identify a user having a problem (and possibly an associated provider); describe the issue; identify the application, service, or product associated with the issue; indicate the current status of the ticket or issue; identify when actions were taken regarding the ticket or issue (e.g., with timestamps); report interactions between the user and one or more agents regarding the issue; etc.

Rules 126, as described above, are workflows or other processes that can be run against some or all tickets. Applying a rule to a ticket causes customer support system 120 to evaluate the rule's associated conditions against the ticket and take one or more actions if and when the conditions are satisfied. One or more of rules 126 may be executed automatically when a ticket is updated (e.g., when the value of a ticket field is changed).

Rule engine 128 may assist in the creation of new rules (e.g., by presenting a user interface for the purpose), may deconstruct a rule into constituent paths, may schedule a given rule to execute against one or more tickets, may run the rule against the ticket, and/or facilitate or perform other actions.

In some embodiments, agents 132 of customer support system 120 and/or agents 142 of a provider 140 may configure particular or customized rules for rule engine 128. In these and/or other embodiments, rule engine 128 maintains a default set of rules that perform common actions and that are available to some or all providers 140. For example, an organization such as Zendesk, Inc. may host customer support system 120 and provide default rules (e.g., triggers, automations) such as those described at the web page located at https://support.zendesk.com/hc/en-us/articles/440883 5051546-About-the-Support-default-automations.

Customer support system 120 may host hundreds of rules, each of which may be specific to a given provider or available to multiple providers. Due to the large quantity of rules hosted by customer support system 120, the amount of processing time and/or other computing resources needed to execute rules (e.g., storage space, communication bandwidth), and the number of tickets that a rule may execute against, customer support system 120 may comprise a distributed computing system that includes multiple computers and data storage devices that cooperate to manage and resolve customer tickets. For example, when customer support system 120 (e.g., as provided by Zendesk, Inc.) supports multiple providers that provide applications 130 to end users, millions of new tickets may be created each day and, in addition, hundreds of thousands of existing tickets may be modified or updated in a typical hour, meaning that tens of millions of tickets may be changed every day through the application of rules 126 and/or other mechanisms.

These numbers naturally grow as end users and/or providers adopt applications 130, applications are added, rules are created, etc. The scale of the problem - processing and managing vast numbers of tickets or other data records - is therefore readily apparent, and conservation of the computing resources that handle tickets and execute rules is highly desirable.

Unfortunately, as the organization's data rules grow in number and are modified to suit the needs of the organization, providers, and end users, rule cascades may inadvertently (or purposefully) arise. Because one developer, programmer, or operator is unlikely to be aware of all rules, a given operator may create one or more new rules (or modify existing rules) such that they form a cascade. This may cause unexpected changes to the organization's data, such as when a new rule triggers a cascade that ends up changing a data item in a way not desired or expected by the creator of the new rule. In this case, a data operation conducted by the new rule likely triggered one or more other rules that caused the unexpected change.

Detecting and resolving cascading data rules can conserve significant amounts of computing resources every hour of every day. Further, however, were rule cascades only detected or searched for at runtime in a production environment (i.e., while customer support system 120 is operating), not only would the resources wasted by the cascade be expended, but the system would also incur the overhead of performing the search for cascades during normal operations and/or possible degradation of computing resources that host applications 130.

Therefore, in some embodiments, rule cascades are searched for and detected when rules are created or modified. For example, before a new or modified rule may be executed in the production environment, a developer, operator or other entity may be required to initiate a process described herein for detecting a cascade. Alternatively, the process may be executed automatically before the rule can be run in the production environment. If a cascade is detected, the developer or operator may be notified and the rule may be quarantined or deactivated until it is tested again and found not to cause a cascade.

It should be noted that the computing environment of FIG. 1 is merely illustrative. In general, any data center or other collection of computing systems that process and/or maintain data using automated processes (e.g., rules, triggers, automations) may apply a method disclosed herein to detect data cascades that threaten to waste the system's resources.

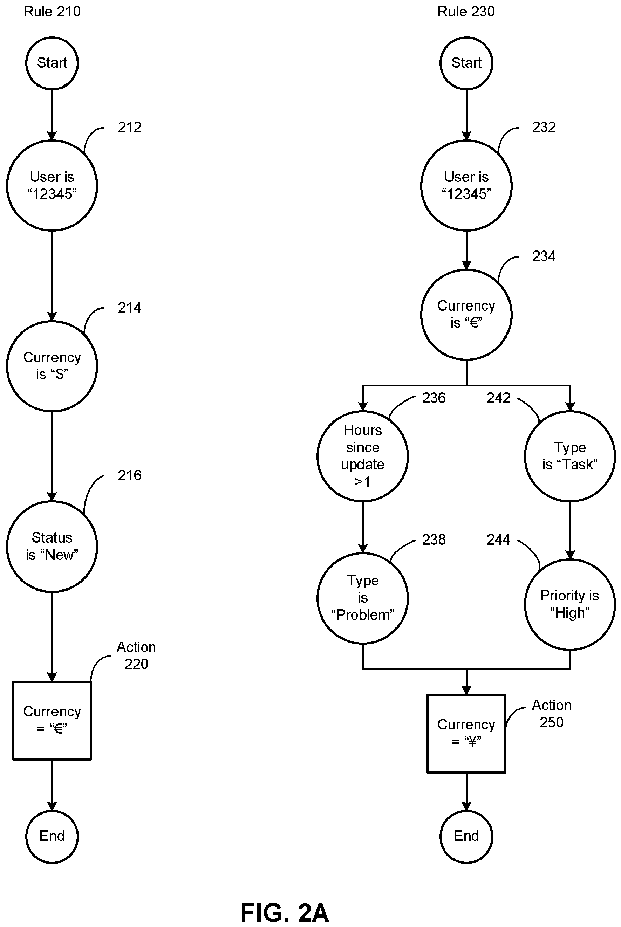

FIG. 2A shows two illustrative rules that may be involved in a cascade, according to some embodiments.

In these embodiments, rule 210 is a simple rule that, when executed against or upon a given data record (e.g., a customer-service ticket), applies conditions 212, 214, 216 to determine whether the record is associated with a user (or provider) having the identifier 12345, whether a currency associated with an issue represented by the record is the U.S. dollar ($), and whether the record status is "New." If all of conditions 212, 214, 216 are satisfied or true, only then will action(s) 220 be implemented. In the illustrated rule, action 220 includes setting the currency field of the record to the euro (€). Actions generally involve altering in some way the record upon which it is executing, by modifying the value or values of one or more fields of the same data record and/or some other record.

Rule 230 of FIG. 2A is more complex than rule 210 due to the inclusion of an OR operator represented by the branch in execution after condition 234. First, condition 232 is applied to determine whether the user or provider associated with a record upon which the rule is executing is 12345. Then, condition 234 is applied to determine whether the currency associated with an issue represented by the record is the euro. At this point, the OR operator allows either (or both) of two branches to be satisfied and (assuming conditions 232, 234 are true) cause action(s) 250 to be performed.

Condition 236 tests whether the record was last updated more than an hour in the past, and condition 238 determines whether the record type is "Problem" (e.g., whether a 'type' field of the record has the value "Problem"). Condition 242 determines whether the record type is "Task" and condition 244 is applied to determine whether the record (and the corresponding issue) have "High" priority. As described above, action(s) 250 may include any type and number of operations that change the record and/or involve other activity. In this case, action 250 sets the currency field to the yen (¥).

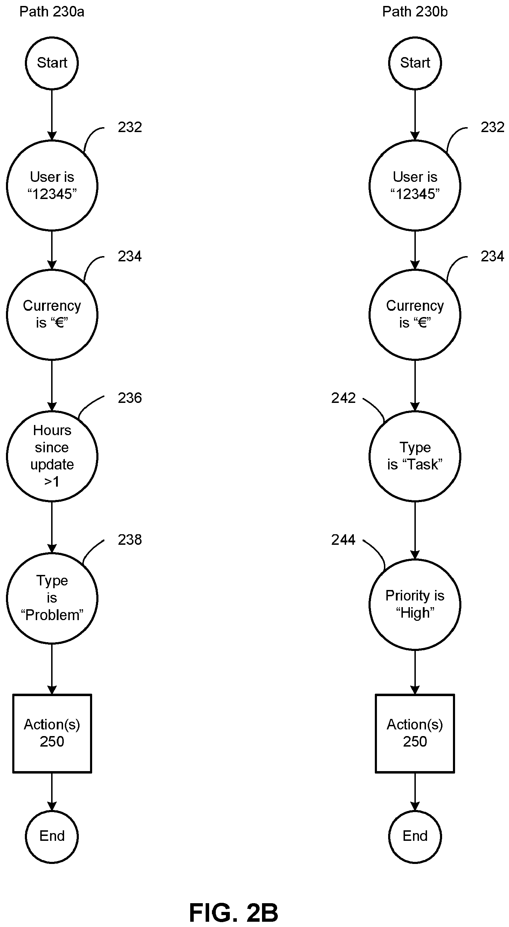

FIG. 2B depicts deconstruction of a multi-path rule into separate paths, according to some embodiments. In particular, in FIG. 2B rule 230 of FIG. 2A is deconstructed into paths 230a and 230b, wherein each path comprises a different branch of the OR operation. Deconstruction of a multi-path rule can facilitate evaluation of the paths, both for determining whether to execute the rule's associated action(s) and for detecting cascading data rules.

Thus, path 230a comprises all conditions before the OR (i.e., conditions 232, 234) and all conditions that are reached through a first branch (i.e., conditions 236, 238) of rule 230. Path 230b comprises the conditions before the OR and all conditions reached through the second branch (i.e., conditions 242, 244). The number of paths into which a rule can be deconstructed depend upon the number of OR connections and the number of branches created by each OR.

Because execution of rule 210 triggers rule 230 by setting the currency field to euro, rules 210, 230 may form a simple cascade. Additional rules may be included in the cascade if, for example, another rule includes a condition that determines whether the currency of the data record is the yen and changes the currency field to another value (or takes some other action that triggers yet another rule), yet another rule is triggered when the currency has the other value and further modifies the currency (or takes some other action), and so on. One of the additional rules may even set the currency field back to the U.S. dollar, thereby triggering the entire cascade again.

In some embodiments, when a new rule is created and/or when an existing rule is modified, it is examined to determine whether it may or will cause a cascade with other rules. In these embodiments, a temporary data structure is generated to track (during the examination) values of data items embodied in the conditions of the target rule and/or data changes caused by the actions of the target rule when at least one path through the rule is satisfied.

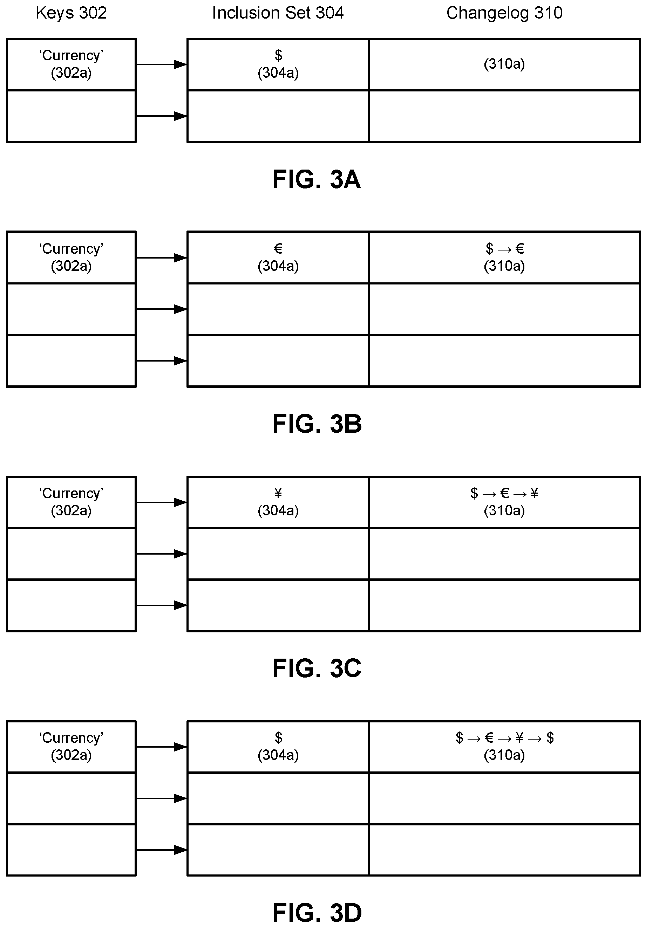

FIGs. 3A-D depict the temporary data structure or dataset as it may evolve during a search for cascading rules, according to some embodiments. In these embodiments, keys 302 correspond to data items that trigger execution of rules (e.g., fields of a data record, parameters of a customer-support ticket). Thus, each key 302 in the data structure corresponds to a different data item that appears in a condition of rule.

By way of illustration, evolution of the data structure will be shown as a cascade is searched for that begins with rule 210 of FIG. 2A (e.g., after rule 210 is created or modified). Although three keys might be defined, for 'User,' 'Currency' and 'Status,' for ease of representation and discussion just one key will be shown and discussed, for the 'Currency' field. Each key 302 in the illustrated dataset is linked to a record comprising an inclusion set 304 and a changelog 310. Inclusion set 304 identifies the value or values of key 302 that will cause one or more conditions in the target rule (i.e., conditions that recite the key) to be true or satisfied.

Thus, based on rule 210 of FIG. 2A, key 302a corresponds to the 'Currency' field of a dataset and is linked to inclusion set 304a, which in FIG. 3A is populated with the value "$" (the only value for 'Currency' that can or would trigger rule 210). Key 302a is also linked to changelog 310a, which is empty or null prior to application of rule 210.

FIG. 3B demonstrates the temporary data structure after rule 210 is triggered and the action(s) associated with rule 210 are executed. Because a cascade can only involve rules that actually fire, it is necessary to simulate execution of the current rule, then determine whether the change(s) implemented by the rule cause or allow another rule to execute as a result. Therefore, inclusion set 304a is updated to the new value "€" of the 'Currency' field set by the action dictated by rule 210, and changelog 310a is updated to record the change from "$" to "€" for the Currency key.

As part of the search for a cascade, at some point rule 230 will be examined to determine if it forms a cascade with rule 210. The illustrated dataset as shown in FIG. 3B reflects application of rule 210 and allows us to determine whether the dataset could or would trigger rule 230. In particular, the current value of inclusion set 304a for 'Currency' key 302a (as set by rule 210) in FIG. 3B is compared with the value(s) of the 'Currency' field that would satisfy one or more conditions of rule 230. If there was no overlap, or if rule 230 did not include any conditions based on the 'Currency' field, the current examination for a cascade (focused solely on the 'Currency' field) could be aborted. Other aspects of the examination might continue (e.g., for other keys 302).

However, because the value of inclusion set 304a in FIG. 3B overlaps (or matches) the 'Currency' value(s) that can trigger rule 230, cascade testing continues. FIG. 3C shows the data structure after it is updated to reflect execution of the action(s) of rule 230, which include setting the 'Currency' field to the value ¥ (yen) and updating changelog 3 10a to record the additional change. A (minimal) cascade has thus been discovered that starts with rule 210 and includes rule 230.

FIG. 3D demonstrates the temporary data structure when a hypothetical additional rule is examined to determine if it extends the cascade involving rules 210 and 230 and the 'Currency' field. It will be assumed that the hypothetical rule includes a condition testing whether the 'Currency' field has the value ¥ and, among its actions, sets the 'Currency' field back to dollar ($). As a result, inclusion set 304a of FIG. 3C overlaps with the set of values that can trigger the additional rule. Therefore, inclusion set 304a is modified to reflect execution of the additional rule, including the change to the 'Currency' field. In addition, changelog 3 10a is further updated to record the change. Thus, the cascade of rules 210 and 230 has been extended and, in addition, a loop has been discovered that resets the 'Currency' field to the value that initiated the cascade.

Investigation could continue regarding key 302a it is determined that no other rule has a condition based on the 'Currency' field, that no other rule that does have a condition based on the 'Currency' field requires a value that overlaps with the current inclusion set 304a, or that all rules have been examined. Also, the investigation could terminate any time after a cascade of any length is found (instead of tracing its full extent), and an operator could be prompted to take action to halt the cascade, especially to break a loop if one exists. In general, starting with a target rule (e.g., a rule just created or modified), for each key or data item that is part of a condition of the target rule (and which may therefore contribute to its actions and/or other rules' actions being executed), some or all other rules are examined in sequence to determine whether execution of the target rule's action(s) will trigger another rule. The data structure or dataset of FIGs. 3A-D assists this examination.

In some embodiments, in order to minimize the number of rules to be examined for possible inclusion in a cascade based on a target rule, only rules that involve conditions based on keys, fields, or parameters (which collectively may be termed 'sources') that are modified by the target rule may be included in the examination. In particular, since the target rule cannot be responsible for initiating a cascade unless one or more of its actions cause another rule to be triggered, rules that don't have conditions based on data items affected by the target rule can be ignored (i.e., without further examination).

However, besides initiating a cascade as a consequence of its action(s), the target rule may also or instead cause or extend a cascade if some other (existing) rule sets or modifies one or more data item values that will cause the target rule's conditions to be satisfied and lead to execution of its actions. Therefore, in addition to assembling or identifying for examination those rules having conditions that the target rule's action(s) may cause to be satisfied, other rules that have actions that update data item values included in the target rule's conditions (and that may cause them to be satisfied) may also be identified.

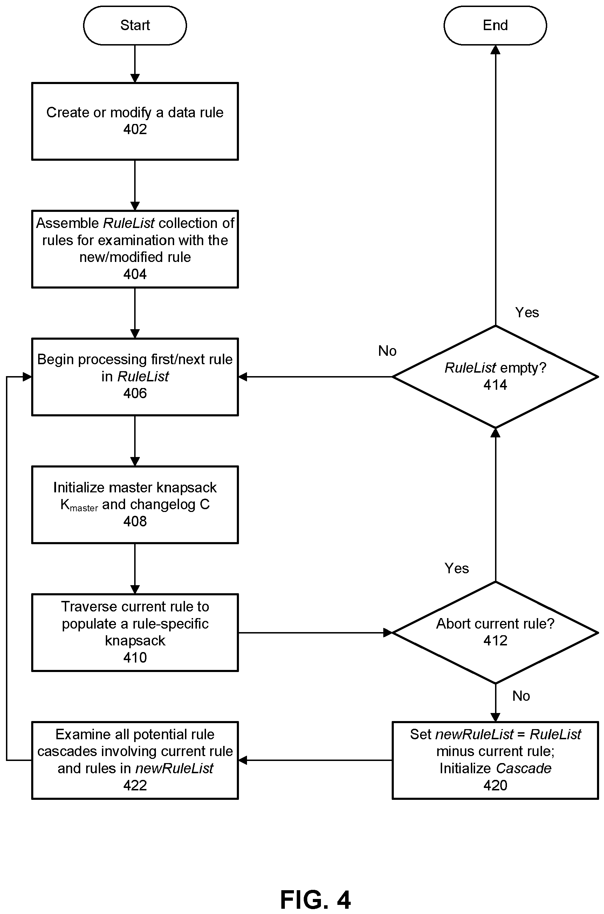

FIG. 4 is a flowchart of a method for detecting cascading data rules or operations, according to some embodiments. One or more of the illustrated steps may be omitted, repeated, and/or performed in a different order. Accordingly, the specific arrangement of steps shown in FIG. 4 should not be construed in a manner that limits the scope of the embodiments.

In the illustrated embodiments, a dataset such as that depicted in FIGs. 3A-D is used to track sources (e.g., fields, parameters, properties, variables) employed in conditions of rules being tested for existence of a cascade, and for convenience may be termed a "knapsack." A 'master' knapsack may track overall processing of a set of rules as cascades are searched for. Further, as each rule and its constituent paths are examined, rule- and/or path-specific versions of the knapsack may be used to facilitate traversal and examination of the rules and paths, after which the master copy of the knapsack may be updated accordingly.

In other words, a master knapsack tracks overall progress in examining a set of rules to determine if they may form a cascade. Temporary copies of the knapsack are made as different permutations or sequences of rules are tested. A temporary knapsack may be abandoned if/when a currently examined rule is not triggered by a previously examined rule (and therefore does not form a cascade with the previous rule), or may be merged or copied into the master knapsack if it is triggered by the previous rule.

In operation 402 of the illustrated method, an operator, developer, customer, user or other person creates a new data rule or modifies an existing data rule (e.g., a trigger, an automation, a data processing rule, or a similar process or function). The new/modified rule may contain conditions based on one or more sources whose values are modified by actions of other rules, and/or include one or more actions that modify sources used in conditions of other rules.

In operation 404, a list or other collection of existing rules is assembled and will be tested for creation of a cascade with the new/modified rule. The collection of rules may be captured in a list (e.g., a *RuleList*) or other data structure. As discussed above, rules included in the *RuleList* may have some connection to the data items and/or actions embodied in the new/modified rule or may simply comprise some or all rules that may potentially be part of a cascade.

In some embodiments, every permutation of the new/modified rule and the collection of other rules may be tested for the existence of a cascade. For example, if the collection includes three rules identified as R₁, R₂, and R₃, and if the new/modified rule is identified as R₀, then every combination may be tested, including potential full-length cascades (having all four rules) and potential shorter cascades (having fewer than four rules). In this example, full-length permutations include R₀-R₁-R₂-R₃, R₀-R₁-R₃-R₂, R₀-R₂-R₁-R₃, ..., R₃-R₂-R₀-R₁, and R₃-R₂-R₁-R₀. Shorter permutations include R₀-R₁, R₀-R₂, R₀-R₃, ..., R₃-R₂, as well as R₀-R₁-R₂, R₀-R₁-R₃, ..., R₃-R₂-R₁. Each of these combinations may be tested and, as soon as it is determined that no cascade exists between two given rules, further testing of the same permutation may be terminated. For example, in the first combination (R₀-R₁-R₂-R₃), if the R₀-Ri combination fails to exhibit a cascade, then all other combinations that start or continue with R₀-R₁ can be omitted from examination.

In operation 406, the first or next rule in *RuleList* is adopted for examination. As will be seen, the following processing repeats for some or all of the rules in *RuleList* so that all permutations of the rules can be examined in sequence.

In operation 408, a master knapsack dataset (Kₘₐₛₜₑᵣ) is initialized for processing associated with the current rule, along with other data structures as needed. As described above, the master knapsack may comprise an array in which some or all sources employed in the current rule's conditions are represented, along with (for each source), an inclusion set identifying values for which the condition(s) that employ the source will evaluate to true or otherwise be satisfied. The master knapsack may also include an exclusion set to identify values for which the same conditions will not evaluate to true and will not be satisfied. Another data structure that may be initialized, or that may be included in the knapsack, is a changelog that tracks changes to the sources' inclusion sets. Each source may have a separate changelog, which may be implemented as a list or other structure. Thus, depending on the context, reference herein to a `changelog' may refer to a given source's changelog or the collection of all sources' changelogs.

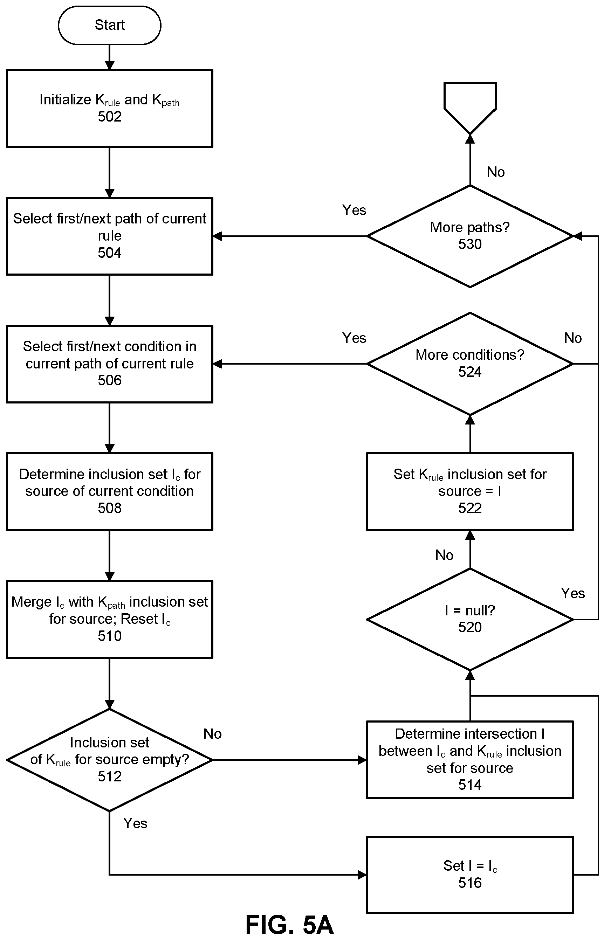

In operation 410, the current rule is traversed path-by-path to populate a copy of the master knapsack based on the rule's conditions and to determine whether the current rule cannot be part of a rule cascade (e.g., because no path of the rule could ever be satisfied) and can therefore be eliminated from the search for cascades. An illustrative process for performing this traversal and making the determination is provided in FIGs. 5A-B and described below, which may be invoked with or using the master knapsack, the changelog, and the current rule.

In operation 412, based on the traversal conducted in operation 410, the system determines whether to abort processing of the current rule. By way of illustration, the traversal of the current rule in operation may reveal that it is impossible or unlikely for the current rule to contribute to a cascade. Thus, it may be discovered that the only way for the current rule to be triggered by another rule (or to trigger another rule) is for an impossible or extremely likely set of data to be encountered, such as when fields of a data item have conflicting values. For example, it is logically impossible for a customer support ticket to have a value of "1 day" for a 'Ticket_Created' field (i.e., how long ago the ticket was created) and simultaneously have the value "4 days" for a 'Last_Response' field (i.e., how long ago an associated user last contacted the customer support center).

If traversal of the current rule reveals that it cannot participate in a cascade (or is very unlikely to do so), processing continues at operation 414. Otherwise, the method advances to operation 420.

In operation 414, the system determines whether the last rule in *RuleList* has been examined (i.e., the list is now empty). If so, the method ends; otherwise, the method returns to operation 406 to adopt the next rule for consideration.

In operation 420, a copy of *RuleList* is made (e.g., as *newRuleList),* from which the current rule is removed because we need not examine whether it forms a cascade with itself. This prepares for the next operation in which remaining rules in *RuleList* are examined in comparison with the current rule. In addition, another list, which may be called *Cascade,* is initialized (to null) in preparation for searching for a cascade proceeding from the current rule.

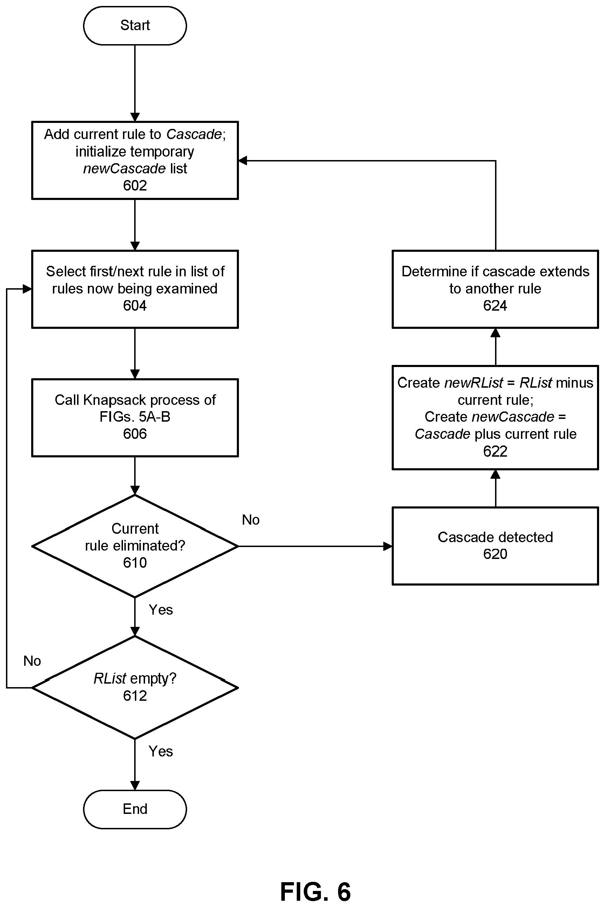

In operation 422, all possible combinations of the rules in *newRuleList* are tested for creation of a cascade with/following the current rule. FIG. 6 illustrates a method for doing this testing, which is described below and which is based on (e.g., may be invoked with) the current rule, *newRuleList, Cascade,* the master knapsack Kₘₐₛₜₑᵣ, and changelog C.

In the method of FIG. 4, it should be understood that the processing loop comprising operations 406 - 422 serves to consider each rule in *RuleList,* in turn. As part of the examination, the current rule is traversed (operation 410) to populate its knapsack, and then every permutation of rules other than the current rule is examined (operation 422) to see if any of them form a cascade from the current rule.

FIGs. 5A-B provide a flowchart of a method of traversing a data rule during a search for a data cascade, according to some embodiments. One or more of the illustrated operations may be omitted, repeated, and/or performed in a different order. Accordingly, the specific arrangement of steps shown in FIGs. 5A-B should not be construed in a manner that limits the scope of the embodiments.

In operation 502, temporary knapsack data structures are initialized - one for the current rule (Kᵣᵤₗₑ) and one for a current path of the current rule (Kₚₐₜₕ). In the illustrated method, Kᵣᵤₗₑ is created as a copy of Kₘₐₛₜₑᵣ, while Kₚₐₜₕ is initialized with a null value. As the paths of the rule and the conditions of each path are examined, either or both of these knapsacks may be updated.

In operation 504, the first or next path of the current rule is selected. Some or all paths will be traversed in turn. As described above in conjunction with FIGs. 2A-B, any rule that branches (e.g., with a logic OR operator) may be divided into linear paths having no branches. Separation of a multi-path rule into individual paths may occur as part of operation 504 or may occur prior to the operation.

In operation 506, the first or next condition is selected. Some or all conditions of the current path of the current rule will be examined. As described previously, each path of a rule comprises one or more conditions that determine whether the value of a particular source (e.g., field, parameter, property) of a data item upon which the rule operates has a specified relationship (e.g., equal to, greater than, etc.) with a target value.

In operation 508, the system determines or identifies inclusion set I_{c} for the source of the current condition; the condition may be represented as c (not to be confused with a changelog, which is represented as C). In particular, the system determines the value or values for the source that will satisfy the condition (e.g., by making it `true'). As already discussed, I_{c} may be a single value or range of values of any type, depending on the source and operator of the condition. Yet further, it may be expressed with reference to the universe U of all values of the pertinent data type. For example, the condition *x !*= 5 may yield the inclusion set I_{c} of {-∞, ..., 2, 3, 4, 6, 7, 8, ..., ∞} for whole numbers, which may be alternatively represented as {U - 5}, wherein U represents the universe of whole numbers.

Also, in addition to (or instead of) determining an inclusion set I_{c} for the condition, an exclusion set E_{c} for the condition may also be identified that represents all values of the source that will cause the condition to *not* be true or satisfied. In some implementations, a function or process applied to make either or both of these determinations is called a Solver function because it 'solves' the condition by identifying source values that satisfy the condition.

In operation 510, the condition's inclusion set I_{c} is added to the source's entry in Kₚₐₜₕ as follows: Kₚₐₜₕ[c.source].I = Kₚₐₜₕ[c.source].I ∪ I_{c}.

Kₚₐₜₕ[c. source].I is the inclusion set field of the entry in Kₚₐₜₕ for the source of condition c. It will be empty or null prior to this operation if no condition based on the source had previously been encountered along the current path. However, if a previous condition in the path was based on the same source, then the inclusion set may already have a value or range of values indicating when the previous condition(s) will be satisfied. In this case, the newly determined inclusion set I_{c} will be added to the existing inclusion set Kₚₐₜₕ[c.source].I (e.g., with a logical AND operator) so that the knapsack identifies all values of the source that will satisfy all conditions of the path that are based on the source.

Also in operation 510, temporary inclusion set variable I_{c} is reset to Kₚₐₜₕ[c.source].I to capture the entire inclusion set for the source for operations to come. The source's exclusion set for the current path (Kₚₐₜₕ[c.source].E) may be updated similarly, in order to capture E_{c}.

In operation 512, the system determines whether the inclusion set of the current rule's knapsack (Kᵣᵤₗₑ[c.source].I) for the source of the current condition c is empty or null, and may also determine whether the corresponding exclusion set (Kᵣᵤₗₑ[c.source].E) is empty or null. These will be null or empty if the current condition c is the first time this source was encountered within the current rule. If the inclusion set is null, the method advances to operation 516; otherwise, it continues with operation 514.

In operation 514, the intersection I between temporary inclusion set I_{c} and the rule's current inclusion set for the source (Kᵣᵤₗₑ[c.source].I) is identified. The intersection E between temporary exclusion set E_{c} and the rule's current exclusion set for the source (Kᵣᵤₗₑ[c.source].E) may also be determined.

In some implementations, a Boolean Solver function is applied to make either or both determinations. It should be recalled that Kᵣᵤₗₑ[c.source].I stores the values of the source that will satisfy (make True) one or more previously encountered conditions based on the source. Thus, the Boolean Solver will find the overlap between that set of source values and the value(s) that will satisfy the current condition of the current path of the rule, if any. If there are no overlaps or intersections, I will be null. After operation 514, the method advances to operation 520.

In operation 516, because the source of the current condition was not previously encountered during traversal of the current rule, the inclusion set (Kᵣᵤₗₑ[c.source].I) and/or the exclusion set (Kᵣᵤₗₑ[c.source].E) for the source, within the rule's knapsack, are empty. Therefore, to facilitate further processing according to the illustrated method, intersection variable I is copied from temporary inclusion set I_{c}. Similarly, intersection E may be copied from temporary exclusion set E_{c}.

In operation 520, intersection I is examined. If it has a null value, the current path is abandoned and the method advances to operation 530. This will occur when there is no overlap between the temporary inclusion set I_{c} for the current condition of the current path and the rule's inclusion set for the source Kᵣᵤₗₑ[c.source].I (from operation 514), and when both I_{c} and Kᵣᵤₗₑ[c.source].I are null (from operation 516).

Otherwise, in operation 522, Kᵣᵤₗₑ[c.source].I is set equal to intersection I to save the source's inclusion set in the rule's knapsack.

In operation 524, the system determines whether further conditions exist in the current path. If so, the method returns to operation 506 to examine the next condition. If not, the method continues at operation 530.

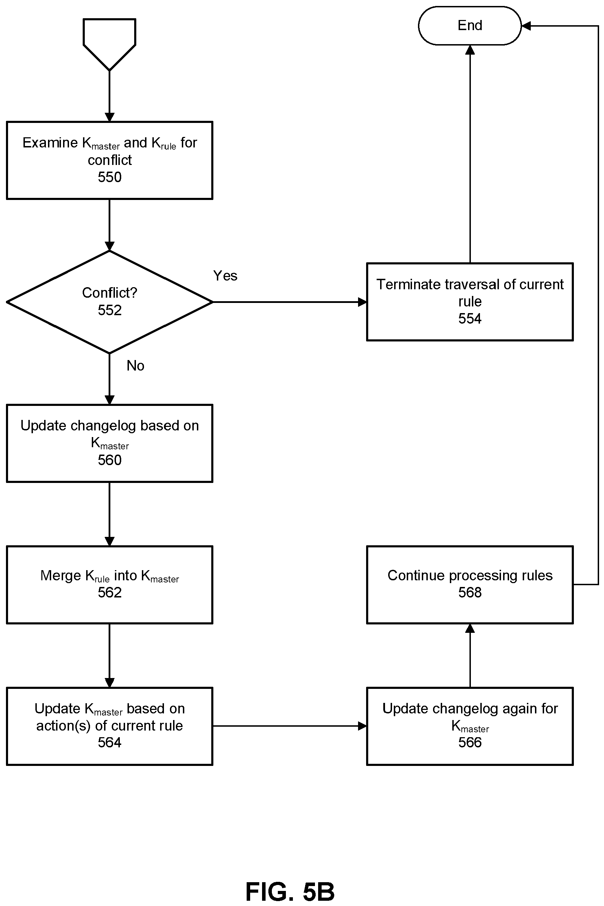

In operation 530, the current path has been completed (from operation 524) or can be abandoned because the current condition can never be satisfied or the current path can never be satisfied because of conflict between inclusion sets for different conditions that are based on the same source. Therefore, the system determines whether all paths of the current rule have been traversed. If not, the method returns to operation 504. If so, the method continues at operation 550 in FIG. 5B.

In operation 550, Kₘₐₛₜₑᵣ and Kᵣᵤₗₑ are examined in combination to determine if they 'conflict' such that sources' inclusion sets in Kₘₐₛₜₑᵣ (which reveal the values of those sources after simulated execution of one or more rules reflected in Kₘₐₛₜₑᵣ) will prevent conditions of the present rule from being satisfied. For example, if there is no overlap or intersection between each source's inclusion set in Kᵣᵤₗₑ and the corresponding inclusion set (for the same source) in Kₘₐₛₜₑᵣ, then no conditions of the current rule will become satisfied by execution of the rules currently reflected in Kₘₐₛₜₑᵣ.

More specifically, and as described above in conjunction with FIGs. 3A-D (and as also discussed below), the inclusion set of Kₘₐₛₜₑᵣ for a given source will identify the ending value(s) of the source resulting from execution of the rules that were traversed during evolution of Kₘₐₛₜₑᵣ. Meanwhile, however, the inclusion sets of Kᵣᵤₗₑ for the various sources examined during traversal of the current rule will still identify the values for which conditions that use the sources will be satisfied (i.e., prior to execution of the rule's action(s)). If there is no intersection between corresponding inclusion sets of the two knapsacks, then the current rule cannot form a cascade when it follows the rule or rules currently represented by Kₘₐₛₜₑᵣ.

In operation 552, the system determines whether the two knapsacks conflict such that no cascade can occur from the rule(s) already captured in Kₘₐₛₜₑᵣ and the current rule. In some embodiments, determination of a conflict occurs when all corresponding inclusion sets of the two knapsacks conflict. In some other embodiments, determination of a conflict occurs when the corresponding inclusion sets of just one or more sources conflict. For example, if there is a particular source that is used in at least one condition of every path through the current rule, and its inclusion set in Kᵣᵤₗₑ (or its inclusion sets in every Kₚₐₜₕ created during traversal of the current rule) has/have no intersection with the corresponding inclusion set in Kₘₐₛₜₑᵣ, then a definite conflict has been discovered. Conversely, if there is at least one inclusion set in one knapsack that intersects with the corresponding inclusion set of the other knapsack, conflict between all other inclusion sets may be ignored.

If a conflict is identified, the method continues at operation 554. If no conflict is discovered, or if the current rule is the first rule examined and added to Kₘₐₛₜₑᵣ, the method advances to operation 560.

In operation 554, traversal of the current rule is terminated because it has been determined that this rule conflicts with previously traversed rules, such that it cannot form or extend a cascade, or because the source values needed to cause a cascade are virtually impossible. The method of FIGs. 5A-B therefore ends and, if this method is employed as part of the method of FIG. 4 (e.g., operation 410), operation 412 is evaluated as true and processing continues the next rule in *RuleList.*

In operation 560, each inclusion set of Kₘₐₛₜₑᵣ is added to changelog C of the corresponding source to capture the source's current value (or range of values).

In operation 562, Kᵣᵤₗₑ is merged into Kₘₐₛₜₑᵣ. In particular, each entry of Kₘₐₛₜₑᵣ for a particular source (i.e., the inclusion set and/or exclusion set) is merged with the corresponding entry from Kᵣᵤₗₑ. This may involve, for example, replacing the Kₘₐₛₜₑᵣ entry with the intersection between the inclusion and/or exclusion sets of the two knapsacks. In particular, if both knapsack entries are non-null, their intersection is determined and stored in Kₘₐₛₜₑᵣ. If only one entry is null, the non-null entry is retained in Kₘₐₛₜₑᵣ. If both entries are null, the saved data need not be changed.

In operation 564, Kₘₐₛₜₑᵣ is updated based on the action(s) of the current rule. In particular, for each source value modified by the action(s), if any, the inclusion set of the source's entry in Kₘₐₛₜₑᵣ is modified to reflect its new value after the action or actions execute.

In operation 566, the updated inclusion sets (if any) from execution of the rule's action(s) are copied into the corresponding changelogs. The changelogs therefore now reflect the changes in the sources' values from before the action(s) execute to after they execute.

In operation 568, the current rule does not conflict with previously traversed rules, and the Kₘₐₛₜₑᵣ knapsack has been updated based on the rule. This means that the method of FIGs. 5A-B ends and the method of FIG. 4 can continue with operation 420 without terminating the processing of the current rule in operation 412.

Returning to the method illustrated in FIG. 4, if processing or traversal of the current rule is aborted (in operation 412), processing continues to the next rule if there is one. However, if the current rule is not put aside, as explained previously, a copy is made of *RuleList* (i.e., *newRuleList)* without the current rule, and the *Cascade* list is created to test for cascades from the current rule to other rules within *RuleList,* in some or all permutations or sequences.

FIG. 6 is a flowchart demonstrating a recursive method of examining a set of rules to determine whether any sequence of the rules form a cascade with a given rule, according to some embodiments. In particular, this method may be implemented as operation 422 of the flow chart of FIG. 4. One or more of the illustrated operations may be omitted, repeated, and/or performed in a different order. Accordingly, the specific arrangement of steps shown in FIG. 6 should not be construed in a manner that limits the scope of the embodiments.

In these embodiments, and as previously mentioned, the recursive process of FIG. 6 is called or executed with several data items, including (an identifier of) the current rule, a list of rules to be examined for a cascade in conjunction with the current rule (e.g., *newRuleList*), a list structure in which to store (identifiers of) rules that form a cascade with the current rule (e.g., *Cascade*), Kₘₐₛₜₑᵣ, and changelog C. The current rule is referred to as r, the list of rules to be examined is called *RList* (vice *newRuleList*), and the list of cascading rules continues to be called *Cascade.*

In operation 602, current rule r is added to *Cascade* and a temporary list *newCascade* is initialized (to null).

In operation 604, the first or next rule in *RList,* which may be termed s to differentiate it from rule r, is selected for examination to determine if it forms or extends a cascade with the rule most recently added to *Cascade.*

In operation 606, the Knapsack process or function of FIGs. 5A-B is invoked with Kₘₐₛₜₑᵣ, current rule s, and C.

In operation 610, based on the Knapsack process (e.g., a value or flag returned when the process terminates), current rule s may be eliminated from consideration because it does not form a cascade with the rule previously added to *Cascade* (e.g., the data integrity process of operation 550 of FIG. 5B identified a conflict). For example, none of the inclusion sets for the sources in Kₘₐₛₜₑᵣ may have values that trigger or satisfy any conditions of rule s. If the current rule can be eliminated from testing for a cascade, the method continues at operation 612. Otherwise, the method advances to operation 620.

In operation 612, the system determines whether *RList* has been exhausted. If so, the method ends or returns to its calling point. Otherwise, the method returns to operation 604 to select the next rule s in the list of rules.

In operation 620, a cascade has been detected. In some implementations this may cause further testing or examination to be aborted in order to alert a developer or operator (e.g., by identifying the rules involved in the cascade, by providing a copy of Kₘₐₛₜₑᵣ and/or changelog C, etc.), so that he or she can take corrective action. In other implementations, and as shown in FIG. 6, however, testing may continue in order to determine whether the cascade extends to any other rules, to identify those other rules, to determine whether additional cascades exist, and/or for other purposes.

In operation 622, the method prepares for the next iteration by copying the *RList* list of rules to *newRList,* but current rule s is removed from *newRList* to avoid comparing it against itself. In addition, the current version of *Cascade* is copied to *newCascade* and current rule s is added to *newCascade.*

In operation 624, the process calls itself to determine if the detected cascade continues. Data passed to the new invocation may include current rule s, *newRList, newCascade*, Kₘₐₛₜₑᵣ, and C, which will be received as rule r, *RList, Cascade,* Kₘₐₛₜₑᵣ, and C.

Therefore, for each list of rules that it receives, the method of FIG. 6 tests for cascades in a recursive manner by trying the various sequences or combinations of rules to see if any of them form a cascade when executed sequentially.

An environment in which one or more embodiments described above are executed may incorporate a general-purpose computer or a special-purpose device such as a hand-held computer or communication device. Some details of such devices (e.g., processor, memory, data storage, display) may be omitted for the sake of clarity. A component such as a processor or memory to which one or more tasks or functions are attributed may be a general component temporarily configured to perform the specified task or function, or may be a specific component manufactured to perform the task or function. The term "processor" as used herein refers to one or more electronic circuits, devices, chips, processing cores and/or other components configured to process data and/or computer program code.

Data structures and program code (which may be referred to as instructions) described in this detailed description are typically provided to a processor by way of a computer-readable medium. A computer readable medium may be a computer-readable storage medium (such as may be used for storage of instructions, whether in a single location or moved between locations) or a computer-readable transmission medium (such as may be used for conveying of instructions). A computer readable storage medium, which may be referred to as being non-transitory, may be any device or medium that can store code and/or data for use by a computer system. Computer-readable storage media include, but are not limited to, volatile memory; nonvolatile memory; electrical, magnetic, and optical storage devices such as disk drives, magnetic tape, CDs (compact discs) and DVDs (digital versatile discs or digital video discs), solid-state drives, and/or other computer-readable media now known or later developed. A computer readable transmission medium, may include carrier waves, transmission signals or the like. A computer-readable transmission medium may convey instructions between components of a single computer system and/or between plural separate computer systems.

Methods and processes described in the detailed description can be embodied as code and/or data (which may also be referred to as instructions), which may be comprised in (for example stored in and/or conveyed by) a computer-readable medium as described above. When a processor or computer system reads and executes the code and manipulates the data stored on the medium, the processor or computer system performs the methods and processes embodied as code and data structures and stored within the medium.

Furthermore, the methods and processes may be programmed into hardware modules such as, but not limited to, application-specific integrated circuit (ASIC) chips, field-programmable gate arrays (FPGAs), and other programmable-logic devices now known or hereafter developed. When such a hardware module is activated, it performs the methods and processes included within the module.

Therefore, from one perspective there have been described example systems and methods for detecting an actual or potential cascade of data rules within a system that processes data, or a cascade of data operations caused by the rules. A cascade involves multiple rules such that an action or actions performed by one rule upon a set of data (e.g., when specified conditions are satisfied) trigger automatic execution of another rule that performs one or more additional actions. Depending on the length and complexity of a cascade, which may be created accidentally, significant amounts of computing resources may be wasted, particularly if the cascade creates a loop that, if unresolved, would cause the cascade to execute repeatedly. One or more temporary data structures are employed to track the effects of a collection of rules (e.g., changes to data item values) to determine whether and when one rule's action(s) trigger another rule.

Further examples are set out in the following numbered clauses.

Clause 1. A method, comprising: identifying multiple rules that cause execution of data operations when specified conditions are true; determining whether a given data operation may cause a cascade of data operations among two or more of the multiple rules; and when a cascade of data operations is identified, prompting action to eliminate the cascade in order to avoid wasting computing resources.

Clause 2. The method of clause 1, wherein each of the multiple rules comprises: one or more paths; and one or more data operations to execute when at least one of the one or more paths is satisfied; wherein: each path comprises one or more conditions; each condition comprises a source, a predetermined value, and an operator for comparing the source with the predetermined value to yield a true or false result; and a source is a parameter or field of a data item upon which a rule may execute.

Clause 3. The method of clause 2, wherein said determining comprises: traversing a first rule to identify changes to values of one or more sources caused by the one or more data operations of the rule; and traversing at least one additional rule to determine if the changes to the values of the one or more sources cause any condition of the additional rules to become true.

Clause 4. The method of clause 3, wherein an actual or potential cascade is determined to exist when the changes to the values of the one or more sources cause any condition of the additional rules to become true.

Clause 5. The method of clause 2, 3 or 4, further comprising, for each of the multiple rules: traversing each path of the rule; identifying conditions of each path; and for each source of the identified conditions, populating a rule-specific data structure with inclusion sets that identify values of the source that will satisfy one or more conditions that comprise the source.

Clause 6. The method of clause 5, further comprising, while traversing each path of the rule: for each source of the identified conditions, populating a path-specific data structure with inclusion sets that identify values of the source that will satisfy one or more conditions that comprise the source; and merging the path-specific data structure with the rule-specific data structure.

Clause 7. The method of clause 6, wherein merging the path-specific data structure with the rule-specific data structure comprises: for each of one or more sources, identifying an intersection between an inclusion set of the source in the path-specific data structure and an inclusion set of the source in the rule-specific data structure.

Clause 8. The method of clause 5, 6 or 7, further comprising: merging the rule-specific data structure with a master data structure for detecting a cascade.

Clause 9. The method of any preceding clause, further comprising: receiving a new or revised rule; wherein said determining comprises examining the new or revised rule in combination with the multiple rules, in every possible sequence, to identify any cascades caused by the possible sequences of rules.

Clause 10. The method of clause 9, wherein prompting action to eliminate the cascade in order to avoid wasting computing resources comprises: notifying a system operator; and prohibiting execution of the new or revised rule until all detected cascades that include the new or revised rule are nullified.

Clause 11. A system for detecting cascading data operations; the system comprising: one or more processors; and memory storing instructions that, when executed by the one or more processors, cause the system to: identify multiple rules that cause execution of data operations when specified conditions are true; determine whether a given data operation may cause a cascade of data operations among two or more of the multiple rules; and when a cascade of data operations is identified, prompt action to eliminate the cascade in order to avoid wasting computing resources.

Clause 12. The system of clause 11, wherein each of the multiple rules comprises: one or more paths; and one or more data operations to execute when at least one of the one or more paths is satisfied; wherein: each path comprises one or more conditions; each condition comprises a source, a predetermined value, and an operator for comparing the source with the predetermined value to yield a true or false result; and a source is a parameter or field of a data item upon which a rule may execute.

Clause 13. The system of clause 12, wherein said determining comprises: traversing a first rule to identify changes to values of one or more sources caused by the one or more data operations of the rule; and traversing at least one additional rule to determine if the changes to the values of the one or more sources cause any condition of the additional rules to become true.

Clause 14. The system of clause 13, wherein an actual or potential cascade is determined to exist when the changes to the values of the one or more sources cause any condition of the additional rules to become true.

Clause 15. The system of clause 12, 13 or 14, wherein the memory further stores instructions that, when executed by the one or more processors, cause the system to, for each of the multiple rules: traverse each path of the rule; identify conditions of each path; and for each source of the identified conditions, populate a rule-specific data structure with inclusion sets that identify values of the source that will satisfy one or more conditions that comprise the source.

Clause 16. The system of clause 15, wherein the memory further stores instructions that, when executed by the one or more processors, cause the system to, while traversing each path of the rule: for each source of the identified conditions, populate a path-specific data structure with inclusion sets that identify values of the source that will satisfy one or more conditions that comprise the source; and merge the path-specific data structure with the rule-specific data structure.

Clause 17. The system of clause 16, wherein merging the path-specific data structure with the rule-specific data structure comprises: for each of one or more sources, identifying an intersection between an inclusion set of the source in the path-specific data structure and an inclusion set of the source in the rule-specific data structure.

Clause 18. The system of clause 15, 16 or 17, wherein the memory further stores instructions that, when executed by the one or more processors, cause the system to: merge the rule-specific data structure with a master data structure for detecting a cascade.

Clause 19. The system of any of clauses 11 to 18, wherein the memory further stores instructions that, when executed by the one or more processors, cause the system to: receive a new or revised rule; wherein said determining comprises examining the new or revised rule in combination with the multiple rules, in every possible sequence, to identify any cascades caused by the possible sequences of rules.

Clause 20. The system of clause 19, wherein prompting action to eliminate the cascade in order to avoid wasting computing resources comprises: notifying a system operator; and prohibiting execution of the new or revised rule until all detected cascades that include the new or revised rule are nullified.

Clause 21. A computer-readable medium comprising instructions that, when executed by a processor, cause the processor to perform a method comprising: identifying multiple rules that cause execution of data operations when specified conditions are true; determining whether a given data operation may cause a cascade of data operations among two or more of the multiple rules; and when a cascade of data operations is identified, prompting action to eliminate the cascade in order to avoid wasting computing resources.

The foregoing embodiments have been presented for purposes of illustration and description only. They are not intended to be exhaustive or to limit this disclosure to the forms disclosed. Accordingly, many modifications and variations will be apparent to practitioners skilled in the art. The scope is defined by the appended claims, not the preceding disclosure.

## Claims

1. A method, comprising:
identifying multiple rules that cause execution of data operations when specified conditions are true;
determining whether a given data operation may cause a cascade of data operations among two or more of the multiple rules; and
when a cascade of data operations is identified, prompting action to eliminate the cascade in order to avoid wasting computing resources.

2. The method of claim 1, wherein each of the multiple rules comprises:
one or more paths; and
one or more data operations to execute when at least one of the one or more paths is satisfied;
wherein:
each path comprises one or more conditions;
each condition comprises a source, a predetermined value, and an operator for comparing the source with the predetermined value to yield a true or false result; and
a source is a parameter or field of a data item upon which a rule may execute.

3. The method of claim 2, wherein said determining comprises:
traversing a first rule to identify changes to values of one or more sources caused by the one or more data operations of the rule; and
traversing at least one additional rule to determine if the changes to the values of the one or more sources cause any condition of the additional rules to become true.

4. The method of claim 3, wherein an actual or potential cascade is determined to exist when the changes to the values of the one or more sources cause any condition of the additional rules to become true.

5. The method of claim 2, 3 or 4, further comprising, for each of the multiple rules:
traversing each path of the rule;
identifying conditions of each path; and
for each source of the identified conditions, populating a rule-specific data structure with inclusion sets that identify values of the source that will satisfy one or more conditions that comprise the source.

6. The method of claim 5, further comprising, while traversing each path of the rule:
for each source of the identified conditions, populating a path-specific data structure with inclusion sets that identify values of the source that will satisfy one or more conditions that comprise the source; and
merging the path-specific data structure with the rule-specific data structure.

7. The method of claim 6, wherein merging the path-specific data structure with the rule-specific data structure comprises:
for each of one or more sources, identifying an intersection between an inclusion set of the source in the path-specific data structure and an inclusion set of the source in the rule-specific data structure.

8. The method of claim 5, 6 or 7, further comprising:
merging the rule-specific data structure with a master data structure for detecting a cascade.

9. The method of any preceding claim, further comprising:
receiving a new or revised rule;
wherein said determining comprises examining the new or revised rule in combination with the multiple rules, in every possible sequence, to identify any cascades caused by the possible sequences of rules.

10. The method of claim 9, wherein prompting action to eliminate the cascade in order to avoid wasting computing resources comprises:
notifying a system operator; and
prohibiting execution of the new or revised rule until all detected cascades that include the new or revised rule are nullified.

11. A system for detecting cascading data operations; the system comprising:
one or more processors; and
memory storing instructions that, when executed by the one or more processors, cause the system to:
identify multiple rules that cause execution of data operations when specified conditions are true;
determine whether a given data operation may cause a cascade of data operations among two or more of the multiple rules; and
when a cascade of data operations is identified, prompt action to eliminate the cascade in order to avoid wasting computing resources.

12. The system of claim 11, further configured to perform the method of any of claims 2 to 10.

13. A computer-readable medium comprising instructions that, when executed by a processor, cause the processor to become configured to perform the method of any of claims 1 to 10.
